# EUROPEAN PATENT SPECIFICATION

(11) **EP 1 200 283 B1**
(45) Date of publication and mention of the grant of the patent: **27.02.2008**
(21) Application number: 00944249.2
(22) Date of filing: 12.07.2000
(51) Int. Cl.: B60K 26/02, B62D 1/04

(54) **STEERING WHEEL MOUNTED MANUAL CONTROL DEVICE, PARTICULARY FOR ACCELERATION**
LENKRADMONTIERTE HANDSTEUERUNGSVORRICHTUNG, INSBESONDERE ZUR BESCHLEUNIGUNGSSTEUERUNG
DISPOSITIF DE COMMANDE MANUELLE MONTE SUR UN VOLANT DE DIRECTION, EN PARTICULIER POUR L'ACCELERATION

(30) Priority: 30.07.1999 IT RM990493
(43) Date of publication of application: 02.05.2002
(73) Proprietor: GUIDOSIMPLEX s.n.c. di Giancarlo Venturini e C., I-00166 Roma (IT)
(72) Inventor: VENTURINI, Sandro, Guidosimplex s.n.c., I-00166 Roma (IT)
(74) Representative: Iannone, Carlo Luigi
(86) International application number: PCT/IT2000/000289
(87) International publication number: WO 2001/008918

(56) References cited:
- EP-A- 0 114 673
- EP-A- 0 699 552
- EP-A- 0 816 156
- EP-A- 0 865 958
- FR-A- 2 208 351
- FR-A- 2 597 038
- US-A- 2 471 244
- US-A- 4 078 628

## Description

The present invention relates to a manual control device, particularly for acceleration control.

More specifically, the invention concerns a device of the above kind that allows the acceleration operation by acting on an electronic accelerator realised in a very simple way.

As it is well known, many devices for acceleration and manual braking exist, realised in such a way to carry out the operation particularly acting on a wheel coaxially provided with respect to the steering wheel.

Most known solutions, many of which have been realised during last decades by the same Applicant, provide a wheel, concentric with respect to the steering wheel, mainly placed external with respect to the same steering wheel, and having mechanisms to allow the sliding each other between wheel and steering wheel, said mechanisms being substantially provided evenly distributed along the steering wheel circumference. Acting on the wheel, one acts on the transmission system for the acceleration and/or braking control, that can be of the mechanical, electro-mechanical, electronic, etc., kind.

US-A-2 471 244 shows such a control device, which corresponds to the preamble of claim 1.

With the development or the electronic accelerator devices, it has been necessary, and also possible, to realise control transmission devices always more simple, allowing to better exploit the features of the electronic accelerators.

In this field It is included the solution suggested according to the present invention that provides a linear action for the acceleration, so that it is possible to carry out a very modulated action during acceleration.

Main object of the present invention is that of allowing to realise a manual control device structurally very simple and easy to install and to use.

Further object of the present invention is that of providing a device that can be used on any kind of vehicle.

Preferably, according to the invention, said little wheel Is slidably mounted on said steering wheel by a L-shaped bracket, slidably coupled to the same little wheel and fixed on the steering rod, allowing the fixing of the device on all the original steering wheels, and maintaining the operation of the air-bag.

Furthermore, according to the invention, said little wheel can be slidably mounted on said steering wheel by a transverse rod fixed to the ends of said steering wheel and on which said little wheel slides, thus allowing the fixing of the device on any kind of original steering wheel, maintaining the operation of the air-bag.

Still according to the invention, said linear sliding mean of the little wheel with aspect to said steering wheel can be comprised of a seat, coupled with said steering wheel coupling means, providing at least a linear bearing, preferably two linear bearings, at least a cylindrical element, coupled with said little wheel and sildable within said at least one bearing, and provided with a stop, being further provided means to transmit the motion between guide and slider to a linear potentiometer and return elastic means to bring the little wheel in its initial position.

Preferably, said means to transmit the motion between guide and cursor can be comprised of a rod linearly sliding with respect to said potentiometer following to the action of said seat.

The present invention will be now described, for illustrative but not limitative purposes, according to its preferred embodiments, with particular reference to the figures of the enclosed drawings, wherein:
figure 1 is an exploded perspective view of a first embodiment of the device according to the invention;
figure 2 is an exploded perspective view of a second embodiment of the device according to the invention;
figure 3 is an exploded perspective view of a third embodiment of the device according to the invention; and
figure 4 is an exploded perspective view of a fourth embodiment of the device according to the invention.

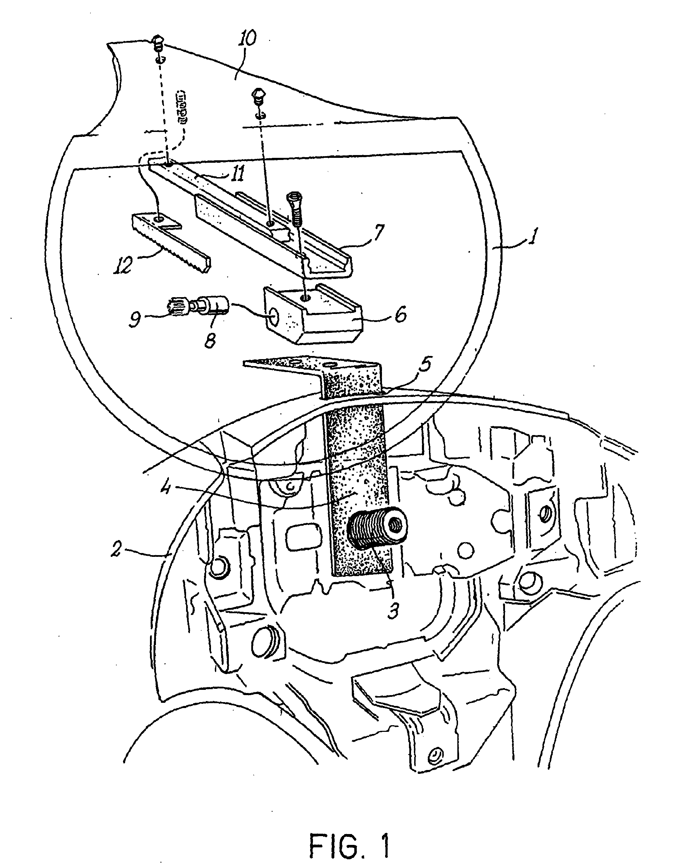

Observing first figure 1, it is shown a first embodiment of the device according to the invention providing a little wheel or wheel 1, that will be mounted in front of the steering wheel 2, i.e. toward the driver, and that, in this embodiment, is fixed to the steering rod 3 of the steering wheel by a L-shaped bracket 4, passing through a suitable slot 5 realised in said steering wheel 2.

A seat 6 is coupled on said bracket 4, bearing a guide 7, and laterally a rotative potentiometer 8 is placed, having a toothed wheel on its end free with respect to said seat 6.

Said little wheel 1 has above a projection 10, under which a lengthened slider 11 is fixed, for sliding along said guide 7.

Always under said projection 10 a rack 12 is fixed, coupling with said toothed wheel 9 of the linear potentiometer 8.

Between the upper arm of the little wheel 1 and said seat 6 a buckling spring (not shown) is provided to return the little wheel in its position.

Acting on the little wheel 1, pushing the same, the driver determines the motion of the slider 7 and the sliding of the rack 12 along the toothed wheel 9, with the consequent action on the potentiometer that, by its sliding contacts, transmits the acceleration control to the vehicle accelerator.

The rectilinear motion of the device according to the invention allows a very smooth and uniform action.

In the following the further embodiments of the device according to the invention will be described. It must be noted that they are substantially similar to the embodiment described with reference to figure 1, so that the corresponding parts will be indicated with the same reference numbers, respectively preceded by 20, 30 or 40.

Also their operation must be considered analogous to the operation of the preceding embodiment.

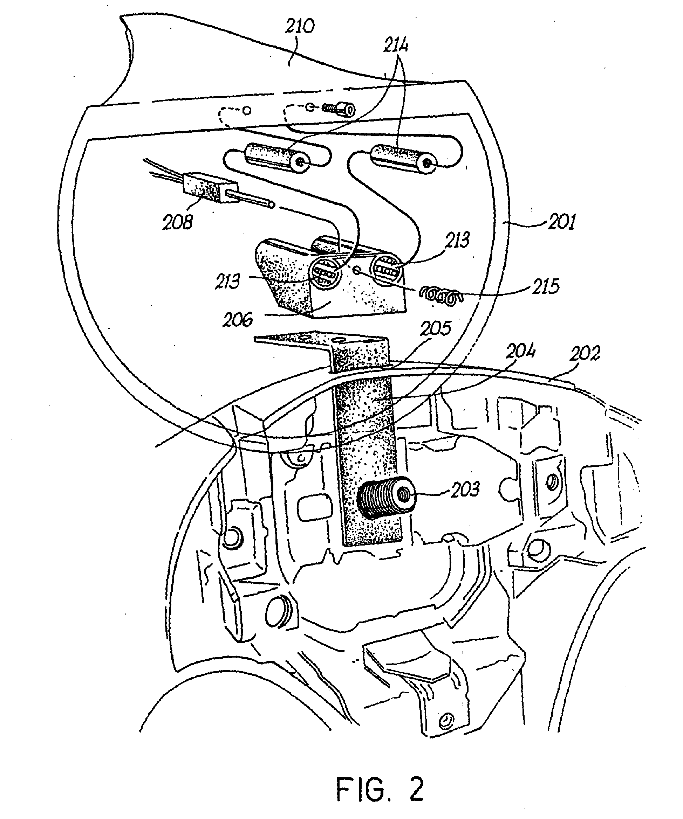

Observing now figure 2, it is shown a second embodiment of the device according to the invention providing a little wheel or wheel 201, that will be mounted in front of the steering wheel 202, i.e. toward the driver, and that, in this embodiment, is fixed to the steering rod 203 of the steering wheel by a L-shaped bracket 204, passing through a suitable slot 205 realised in said steering wheel 202.

A seat 206 is coupled on said bracket 204, bearing two bearings 213, and centrally a linear potentiometer 208 is placed.

Said little wheel 201 has above a projection 210, under which two lengthened cylinders 214 are fixed, sliding coupling in said bearings 213. Rear, said cylinders are provided with a stop (not shown).

Between the upper arm of the little wheel 201 and said seat 206 a buckling spring 215 is provided to return the little wheel 201 in its position.

Acting on the little wheel 201, pushing the same, the driver determines the motion of the cylinders 214 within said bearings 213, with the consequent action of the movable rod 215 of the potentiometer that, by its sliding contacts, transmits the acceleration control to the vehicle accelerator.

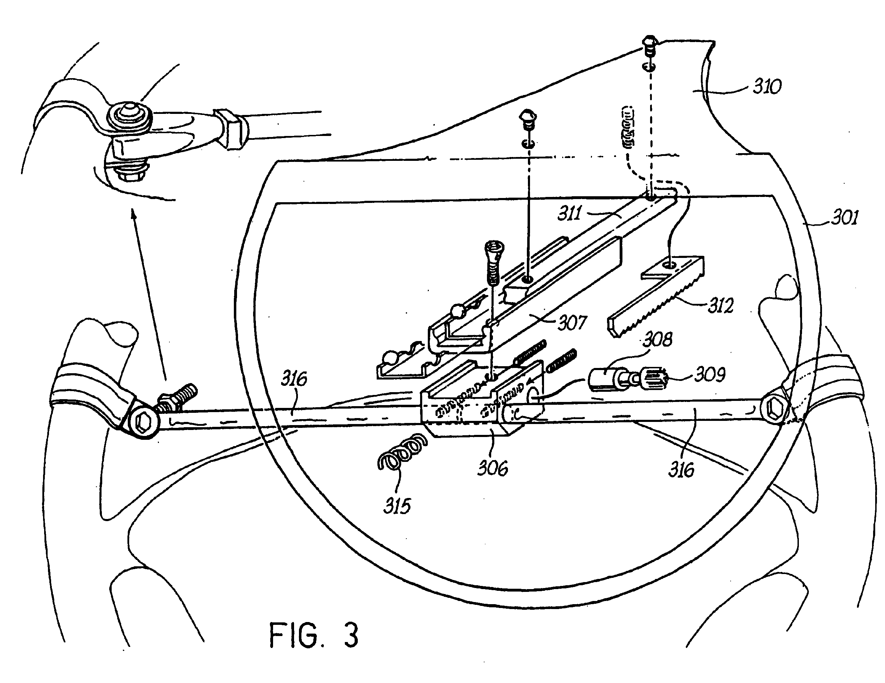

Observing now figure 3, it is shown a third embodiment of the device according to the invention providing a little wheel or wheel 301, that will be mounted in front of the steering wheel 302, i.e. toward the driver, and that, in this embodiment, is fixed to the steering wheel 302 by the rod 316.

A seat 206 is coupled on said rod 316, bearing a guide 307, and laterally a rotative potentiometer 308, having a toothed wheel on the end free with respect to said seat 306.

Said little wheel 301 has above a projection 310, under which a lengthened slider 311 is fixed for sliding along said guide 307.

Always under said projection 310 a rack 312 is fixed, coupling with said toothed wheel 309 of the linear potentiometer 308.

Between the upper arm of the little wheel 301 and said seat 306 a buckling spring 315 is provided to return the little wheel 301 in its position.

Acting on the little wheel 301, pushing the same, the driver determines the motion of the slider 307 and the sliding of the rack 312 on the toothed wheel, with the consequent action on the potentiometer that, by its sliding contacts, transmits the acceleration control to the vehicle accelerator.

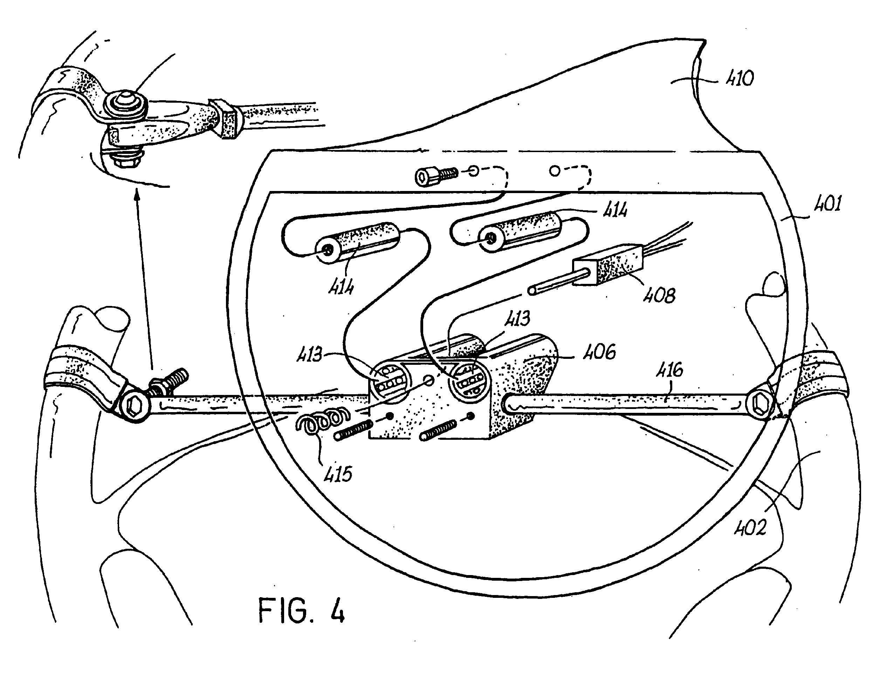

Observing now figure 4, it is shown a fourth embodiment of the device according to the invention providing a little wheel or wheel 401, that will be mounted in front of the steering wheel 402, i.e. toward the driver, and that, in this embodiment, is fixed by the rod 416.

A seat 416 is coupled on said rod 406, bearing two bearings 413, and centrally a linear potentiometer 408.

Said little wheel 401 has above a projection 410, under which two lengthened cylinders 414 are fixed, sliding coupling in said bearings 413. Rear, said cylinders are provided with a stop (not shown).

Between the upper arm of the little wheel 401 and said seat 406 a buckling spring 415 is provided to return the little wheel 401 in its position.

Acting on the little wheel 401, pushing the same, the driver determines the motion of the cylinders 414 within said bearings 413, with the consequent action of the movable rod 415 of the potentiometer that, by its sliding contacts, transmits the acceleration control to the vehicle accelerator.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Manual control device, particularly for acceleration control, comprising a little wheel or wheel (201;101), movable with respect to the vehicle steering wheel (202;402) and mounted substantially coaxial with respect to the same by mounting means substantially fixed with respect to said steering wheel (202;402), linear sliding means of the little wheel (201;401) with respect to the steering wheel (202;402) acting on a potentiometer (208;408) which is connected with the device to which the manual control must be transmitted, **characterised In that** said linear sliding means of the little wheel with respect to said steering wheel are comprised of a seat (206;406), coupled with said steering wheel coupling means (204;416), providing at least a linear bearing (213;413), preferably two linear bearings, at least a cylindrical element (214:416), coupled with said little wheel and slidable within said at least one bearing (213;413), and provided with a stop, being further provided means to transmit the motion between guide and slider to a linear potentiometer (208;408) and return elastic means to bring the little wheel in its initial position.

2. Manual control device according to claim 1, **characterised in that** said means to transmit the motion between guide and cursor are comprised of a rod (215;415) linearly sliding with respect to said potentiometer (203;408) following to the action of said seat.

3. Manual control device according to claim 1 or 2, **characterised in that** said little wheel (201;401) is slidably mounted on said steering wheel (202,402) by a L-shaped bracket (205;405), slidably coupled to the same little wheel (201;401) and fixed on the steering rod (203;403), allowing the fixing of the device on all the original steering wheels, and maintaining the operation of the air-bag.

4. Manual control device according to claim 1, **characterised in that** said little wheel (201;401) is slidably mounted on said steering wheel (202:402) by a transverse rod (216;416) fixed to the ends of said steering Wheel (202;402) and on which said little wheel (201;401) slides, thus allowing die fixing of the device on any kind of original steering wheel, maintaining the operation of the air-bag.

## Patentansprüche

1. Manuelle Steuervorrichtung, insbesondere für die Beschleunigungssteuerung, umfassend ein kleines Rad oder Rad (201; 401), das beweglich in Bezug zu dem Fahrzeuglenkrad (202; 402) ist und mithilfe eines Montagemittels im Wesentlichen koaxial zum Fahrzeuglenkrad angebracht ist, wobei das Montagemittel in Bezug zu dem Lenkrad (202, 204) im Wesentlichen befestigt ist; ein lineares Gleitmittel des kleinen Rads (201; 401) in Bezug zu dem Lenkrad (202; 402), das auf ein Potentiometer (208; 408) einwirkt, das mit der Vorrichtung verbunden ist, an welche die manuelle Steuerung übertragen werden muss, **dadurch gekennzeichnet, dass** das besagte lineare Gleitmittel des kleinen Rads in Bezug zu dem besagten Lenkrad einen Sitz (206; 406) umfasst, der mit dem besagten Lenkradverbindungsmittel (204; 416) verbunden ist, wobei mindestens ein lineares Lager (213; 413), vorzugsweise zwei lineare Lager, mindestens ein zylindrisches Element (214; 416), das mit dem besagten kleinen Rad verbunden ist und gleitbar in dem besagten mindestens einen Lager (213; 413) ist und mit einer Stoppvorrichtung versehen ist, vorgesehen sind; wobei ferner ein Mittel zur Übertragung der Bewegung zwischen Führung und Gleiter zu einem linearen Potentiometer (208; 408) und ein elastisches Rückstellmittel, welches das kleine Rad wieder in seine Anfangsposition bringt, vorgesehen sind.

2. Manuelle Steuervorrichtung nach Anspruch 1, **dadurch gekennzeichnet, dass** das besagte Mittel zur Übertragung der Bewegung zwischen Führung und Positionsanzeige eine Stange (215; 415) umfasst, die linear in Bezug zu dem besagten Potentiometer (208; 408) nach der Aktion des besagten Sitzes gleitet.

3. Manuelle Steuervorrichtung nach Anspruch 1 oder 2, **dadurch gekennzeichnet, dass** das kleine Rad (201; 401) mithilfe einer L-förmigen Halterung (205; 405) gleitbar auf dem besagten Lenkrad (202; 402) angebracht ist, gleitbar mit demselben kleinen Rad (201; 401) verbunden ist und an der Lenkstange (203; 403) befestigt ist, wodurch es möglich ist, die Vorrichtung an allen Originallenkrädern zu befestigen und die Funktion des Airbags aufrechtzuerhalten.

4. Manuelle Steuervorrichtung nach Anspruch 1, **dadurch gekennzeichnet, dass** das besagte kleine Rad (201; 401) mithilfe einer Querstange (216; 416) gleitbar auf dem besagten Lenkrad (202; 402) angebracht ist, wobei die Querstange an den Enden des besagten Lenkrads (202;402) befestigt ist und das besagte kleine Rad (201; 401) auf der Querstange gleitet, wodurch es möglich ist, die Vorrichtung an jeder Art von Originallenkrad bei Aufrechterhaltung der Funktion des Airbags zu befestigen.

## Revendications

1. Dispositif de commande manuelle, en particulier pour commander l'accélération, comprenant une petite roue ou roue (201 ; 401), mobile par rapport au volant du véhicule (202 ; 402) et montée de manière sensiblement coaxiale par rapport à celui-ci à l'aide d'un dispositif de montage sensiblement fixe par rapport audit volant (202 ; 402), des moyens de coulissement linéaire de la petite roue (201 ; 401) par rapport au volant (202 ; 402) agissant sur un potentiomètre (208 ; 408) qui est relié au dispositif auquel la commande manuelle doit être transmise, **caractérisé en ce que** lesdits moyens de coulissement linéaire de la petite roue par rapport audit volant sont constitués d'une assise (206 ; 406) couplée audit moyen de couplage de volant (204 ; 416), fournissant au moins un palier linéaire (213 ; 413), de préférence deux paliers linéaires, au moins un élément cylindrique (214 ; 416), couplé à ladite petite roue et pouvant coulisser dans ledit au moins un palier (213 ; 413), et muni d'un butoir, ainsi que de moyens de transmission du mouvement entre un guide et un curseur à un potentiomètre linéaire (208 ; 408) et des moyens de retour élastique destinés à ramener la petite roue dans sa position initiale.

2. Dispositif de commande manuelle selon la revendication 1, **caractérisé en ce que** lesdits moyens de transmission du mouvement entre le guide et le curseur sont constitués d'une tige (215 ; 415) coulissant de manière linéaire par rapport audit potentiomètre (208 ; 408) à la suite de l'action de ladite assise.

3. Dispositif de commande manuelle selon la revendication 1 ou 2, **caractérisé en ce que** ladite petite roue (201 ; 401) est montée de manière coulissante sur ledit volant (202 ; 402) à l'aide d'un support en forme de L (205 ; 405), couplé de manière coulissante à ladite petite roue (201 ; 401) et fixé sur la tige de direction (203 ; 403), permettant de fixer le dispositif sur tous les volants d'origine et de maintenir le coussin de sécurité gonflable en état de fonctionnement.

4. Dispositif de commande manuelle selon la revendication 1, **caractérisé en ce que** ladite petite roue (201 ; 401) est montée de manière coulissante sur ledit volant (202 ; 402) à l'aide d'une tige transversale (216 ; 416) fixée au niveau des extrémités dudit volant (202 ; 402) et sur laquelle ladite petite roue (201 ; 401) coulisse, permettant ainsi de fixer le dispositif sur n'importe quel type de volant d'origine tout en maintenant le coussin de sécurité gonflable en état de fonctionnement.
